# EUROPÄISCHE PATENTSCHRIFT

(11) **EP 3 290 306 B1**
(45) Veröffentlichungstag und Bekanntmachung des Hinweises auf die Patenterteilung: **15.09.2021**
(21) Anmeldenummer: 17164468.5
(22) Anmeldetag: 03.04.2017
(51) Int. Cl.: B62D 55/04, B62D 55/125, B62D 55/084

(54) **MODULARE RAUPENANBINDUNG FÜR EINE SELBSTFAHRENDE ERNTEMASCHINE**
MODULAR TRACK CONNECTION FOR A SELF-PROPELLED HARVESTING MACHINE
LIAISON À CHENILLES MODULAIRE POUR MOISSONNEUSE AUTOMOTRICE

(30) Priorität: 05.09.2016 DE 102016116544
(43) Veröffentlichungstag der Anmeldung: 07.03.2018
(73) Patentinhaber: CLAAS Selbstfahrende Erntemaschinen GmbH, 33428 Harsewinkel (DE)
(72) Erfinder: Uesbeck, Tobias, 48599 Gronau-Epe (DE); Dopheide, Gregor, 33775 Versmold (DE); Tilly, Thomas, 48231 Warendorf (DE); Behra, Jan-Philipp, 33332 Gütersloh (DE)
(74) Vertreter: CLAAS Gruppe

(56) Entgegenhaltungen:
- US-A- 2 496 136
- US-A- 3 828 873
- US-A- 4 448 273
- US-A1- 2012 211 288

## Beschreibung

Die vorliegende Erfindung betrifft eine modulare Raupenanbindung für eine selbstfahrende Erntemaschine, eine Triebachsanordnung mit einem Triebachskörper und zwei solchen modularen Raupenanbindungen, sowie eine selbstfahrende Erntemaschine mit einem solchen Triebachskörper.

Auf nachgiebigen und/oder nassen Böden werden bei der Ernte, beispielsweise bei der Reisernte, häufig Raupenfahrzeuge genutzt. Um eine Erntemaschine auch auf anderen Böden nutzen zu können, sind die Raupenlaufwerke oftmals durch Reifen austauschbar.

Eine Erntemaschine mit Raupenlaufwerken, die durch Reifen austauschbar sind, zeigt beispielsweise die Patentschrift EP 2 360 085 B1. Der Durchmesser des Antriebsrades des Raupenlaufwerks ist kleiner als der der Reifen. Um im Raupenbetrieb weder den Antriebsmotor noch die Übersetzung des Antriebsmotors anpassen zu müssen, wird jeweils an den gegenüberliegenden Enden eines Triebachskörpers eine Trägerplatte angeordnet, die neben einer Endübersetzungseinheit jeweils ein zusätzliches Übersetzungsgetriebesystem trägt. Das Raupenlaufwerk ist an der Endübersetzungseinheit gelagert. Das Übersetzungsgetriebesystem kompensiert die Differenz der Übersetzung der Antriebsdrehzahl im Raupenbetrieb gegenüber der im Reifenbetrieb. Um bei dieser Anordnung mit Übersetzungsgetriebesystem ein Anbringen von Reifen, die zu einer unerlaubt hohen Geschwindigkeit führen würde, zu verhindern, sind an der Trägerplatte stegförmige Anformungen vorgesehen. Um die Erntemaschine mit Reifen zu betreiben, müssen die Endübersetzungseinheit und die Trägerplatte mit dem Übersetzungsgetriebesystem daher entfernt, und die Endübersetzungseinheit danach wieder angebaut werden. Dies stellt einen erheblichen Montageaufwand dar.

Die Druckschriften US 2012/211288 A1, US 4 448 273 A, US 3 828 873 A und US 2 496 136 A offenbaren jeweils Raupenanbindungen, die zum Anordnen an ein Ende eines Triebachskörpers vorgesehen sind und die ein Trägerelement umfassen, an dem ein Lager zum Lagern eines Raupenlaufwerks angeordnet ist.

Aufgabe der vorliegenden Erfindung ist es, eine Raupenanbindung für eine selbstfahrende Erntemaschine bereit zu stellen, die eine alternative Nutzung von Raupenlaufwerken und Reifen mit weniger Umbauaufwand ermöglicht. Eine weitere Aufgabe der Erfindung ist es, eine optimierte Einleitung von Kräften in den Triebachskörper zu erreichen.

Die Aufgabe wird gelöst mit einer modularen Raupenanbindung für eine selbstfahrende Erntemaschine mit den Merkmalen des unabhängigen Patentanspruchs 1, einer Triebachsanordnung mit den Merkmalen des unabhängigen Patentanspruchs 12 sowie einer selbstfahrenden Erntemaschine mit einer solchen Triebachsanordnung mit den Merkmalen des unabhängigen Patentanspruchs 14. Vorteilhafte Ausführungsformen sind den abhängigen Ansprüchen entnehmbar.

Dafür wird eine modulare Raupenanbindung für eine selbstfahrende Erntemaschine geschaffen. Die Raupenanbindung ist zum Anordnen an ein Ende eines Triebachskörpers vorgesehen. Sie weist ein Trägerelement auf, an dem ein Lager angeordnet ist.

Das Lager dient zum Lagern eines Raupenlaufwerks und erstreckt sich parallel zu einer Triebachse für das Raupenlaufwerk.

Die Lagerung des Raupenlaufwerkes oder des Reifens an dem Trägerelement ermöglicht ein wahlweises Anordnen des Raupenlaufwerks oder des Reifens an den Triebachskörper ohne große Umbauarbeiten. Die Raupenanbindung ist modular an dem Triebachskörper anordbar und kann daher nachgerüstet werden.

In einer bevorzugten Ausführungsform ist das Lager oder eine Lagerachse, entlang der sich das Lager erstreckt, konzentrisch zur Triebachse angeordnet. In dieser Ausführungsform ist es besonders bevorzugt als Kugelkranz ausgebildet. Diese Ausführungsform ist bauraumsparend und kann sowohl für Raupenlaufwerke verwendet werden, bei denen die Lagerachse konzentrisch zur Triebachse angeordnet ist, als auch für Raupenlaufwerke, bei denen die Lagerachse zur Triebachse versetzt ist.

Es ist daher ebenfalls bevorzugt, dass das Lager exzentrisch zur Triebachse angeordnet ist. Bevorzugt ist es in dieser Ausführungsform als Kugel- oder Gleitlager ausgebildet. Dadurch ist das Raupenlaufwerk pendelnd gelagert. Es kann aber auch eine starre Lagerung des Raupenlaufwerks vorgesehen sein.

In einer bevorzugten Ausführungsform ist am Trägerelement eine Steckachse vorgesehen, die zum Lagern des Raupenlaufwerks dient. Die Steckachse ist bevorzugt von der Triebachse beabstandet. Eine solche Steckachse ermöglicht daher die exzentrische Lagerung des Raupenlaufwerks. Das Lager ist dann an der Steckachse angeordnet. Die Steckachse erstreckt sich dann entlang der Lagerachse und parallel der Triebachse.

Die Raupenanbindung zeichnet sich dadurch aus, dass das Trägerelement als Trägerplatte ausgebildet ist, die sich quer zur Triebachse erstreckt. Die Trägerplatte ist konstruktiv einfach herstellbar und erfordert nur einen geringen Bauraum in Richtung der Triebachse.

Die Raupenanbindung ist an einen Triebachskörper anflanschbar. Bevorzugt weist das Trägerelement dafür eine Durchgangsbohrung auf oder ist als Hohlkörper ausgebildet. Eine die Durchgangsbohrung oder den Hohlkörper durchsetzende Achse ist bevorzugt parallel zur Triebachse angeordnet. Dies vereinfacht eine konzentrische Positionierung der Raupenanbindung zur Triebachse. Ein solches Positionieren ist aber auch ohne Durchgangsbohrung oder bei einem Vollkörper möglich.

Anschließend ist ein Achsendabtrieb an der Raupenanbindung befestigbar. An einen Radflansch, insbesondere des Achsendabtriebs, ist ein Antriebsrad des Raupenlaufwerks, oder ein Rad mit einem Reifen befestigbar. Die Raupenanbindung ist dann zwischen dem Triebachskörper und dem Achsendabtrieb angeordnet.

Die Steckachse kann stoffschlüssig an der Trägerplatte angeordnet sein, insbesondere einstückig mit dieser gebildet oder angeschweißt. Es ist aber bevorzugt, dass die Steckachse lösbar an der Trägerplatte befestigt ist. Im gelösten Zustand, in dem die Steckachse nicht mehr an der Trägerplatte angeordnet ist, ist ein Reifen am Triebachskörper anordbar.

Alternativ oder zusätzlich ist es bevorzugt, die Steckachse mehrteilig auszubilden. Dadurch kann ein erster, ein offenes Ende der Steckachse bildender Teil der Steckachse von dieser abgenommen werden, so dass der verbleibende zweite Teil der Steckachse ausreichend kurz ist, um den Reifen nicht zu behindern. Bei entferntem erstem Teil der Steckachse kann anstelle eines Raupenlaufwerks ein Reifen an den Triebachskörper montiert werden.

Ein Umbau vom Raupenbetrieb in den Reifenbetrieb ist bei am Triebachskörper angeordneter Raupenanbindung bei dieser Ausführungsform daher lediglich durch ein Entfernen der Steckachse oder eines Teils der Steckachse möglich. Umgekehrt ist bei am Triebachskörper angeordneter Raupenanbindung ein Umbau vom Reifenbetrieb in den Raupenbetrieb lediglich durch ein Anbauen der Steckachse oder eines Teils der Steckachse möglich. Ein Entfernen oder Anbauen von Getriebeteilen ist nicht erforderlich.

Die Raupenanbindung zeichnet sich weiterhin dadurch aus, dass an einer Seite der Trägerplatte ein Abstandskörper an der Trägerplatte angeordnet ist. Die Seite ist bevorzugt dem Triebachskörper zugewandt. Der Abstandkörper ermöglicht so das Einleiten von auf die Steckachse wirkenden Kräften, insbesondere Biegekräften, in den Triebachskörper in einem definierten Abstand zur Trägerplatte. Zum Einleiten der Kräfte in den Triebachskörper ist es bevorzugt, dass am Abstandskörper ein Stützsteg angeordnet ist, der sich parallel der Trägerplatte, insbesondere in eine vertikale Richtung, erstreckt.

Der Abstandkörper weist bevorzugt eine ihn begrenzende Wand auf, die sich im Wesentlichen parallel der Trägerplatte erstreckt. Vorzugsweise durchsetzt die Steckachse den Abstandskörper vollständig, insbesondere bis zur Wand. Die Kräfte werden dann von der Steckachse aus in dem definierten Abstand über die Trägerplatte, den Abstandskörper und die Wand in den Triebachskörper geleitet.

Als lösbare Befestigung der Steckachse ist bevorzugt ein Klemmbügel vorgesehen. Besonders bevorzugt ist die Steckachse an der Trägerplatte und/oder der Wand durch einen Klemmbügel gehalten. Ein Klemmbügel ist oder mehrere Klemmbügel sind lösbar, insbesondere verschraubbar, an der Trägerplatte und/oder an der Wand anordbar. Diese Ausführungsform ermöglicht daher ein schnelles und komfortables Umrüsten der selbstfahrenden Erntemaschine vom Raupenbetrieb in den Reifenbetrieb oder umgekehrt, lediglich durch das Lösen der Klemmbügel. Die im Raupenbetrieb erforderliche Steckachse wird dabei für den Reifenbetrieb entfernt, und für den Raupenbetrieb wieder montiert.

Besonders bevorzugt bilden die Trägerplatte und zumindest ein von dieser beabstandeter, Klemmbügel eine Auflagefläche für die Steckachse in Hauptkraftrichtung. Dafür ist dieser Klemmbügel bevorzugt mit dem Abstandskörper, insbesondere der Wand des Abstandskörpers, stoffschlüssig verbunden, insbesondere angeschweißt. Dadurch ist das Risiko, dass sich die die Steckachse, und mit ihm das Raupenlaufwerk, löst, gegenüber einer Schraubverbindung erheblich verringert. - 4 -

Die Aufgabe wird weiterhin gelöst mit einer Triebachsanordnung mit einem Triebachskörper und zwei solchen modularen Raupenanbindungen. Die Raupenanbindungen sind jeweils an gegenüberliegenden Enden des Triebachskörpers, insbesondere spiegelsymmetrisch zueinander, angeordnet. Jede der Raupenanbindungen ermöglicht jeweils ein Anordnen von entweder einem Raupenlaufwerk oder einem Rad mit einem Reifen an den Triebachskörper.

Die modularen Raupenanbindungen sowie der Triebachskörper sind bevorzugt fluchtend zu einer Triebachse für die Raupenlaufwerke angeordnet. Bei einer Ausbildung der Raupenanbindung mit Steckachse erstreckt sich diese dann fluchtend zur Triebachse, oder parallel zu dieser, so dass sie von ihr beabstandet ist.

Bei exzentrisch Lagerung des Raupenlaufwerks an der Steckachse ist es weiterhin bevorzugt, dass die Triebachsanordnung für jede modulare Raupenanbindung einen Quersteg umfasst, der zum Abstützen einer von der Steckachse in den Triebachskörper einleitbaren Kraft vorgesehen ist. Vorzugsweise wirkt der Quersteg mit dem Stützsteg des Abstandskörpers zusammen. Besonders bevorzugt sind der Quersteg und der Stützsteg quer zueinander angeordnet und aneinander befestigt. Dabei ist es ganz besonders bevorzugt, dass der Quersteg als u- Profil ausgebildet ist, in das der Stützsteg eingreift. In dieser Ausführungsform verhindern Schenkel des Querstegs ein Verschieben des Stützstegs in oder gegen eine axiale Richtung parallel der Triebachse.

Zur Versteifung der Triebachsanordnung ist es weiterhin bevorzugt, dass zwischen den modularen Raupenanbindungen eine Versteifungsstrebe vorgesehen ist, die die Raupenanbindungen mechanisch miteinander verbindet.

Die Aufgabe wird weiterhin gelöst mit einer selbstfahrenden Erntemaschine mit einer solchen Triebachsanordnung. Durch die Nutzung der Raupenanbindung können entweder Raupenlaufwerke oder Reifen am Triebachskörper angeordnet werden. Die selbstfahrende Erntemaschine ist dann wahlweise im Raupenbetrieb oder im Reifenbetrieb betreibbar. Die Raupenanbindung ist zudem modular an dem Triebachskörper anordbar. Nach ihrem Entfernen kann die selbstfahrende Erntemaschine daher in herkömmlicher Art und Weise im Reifenbetrieb betrieben werden. Andererseits kann die Raupenanbindung auch nachgerüstet werden.

In einer bevorzugten Ausführungsform wird die Raupenanbindung für einen Mähdrescher genutzt, insbesondere an der Vorderachse des Mähdreschers. Prinzipiell ist sie aber auch für andere selbstfahrende Erntemaschinen, insbesondere selbstfahrende Feldhäcksler, nutzbar.

Die vorliegende Erfindung wird nachstehend anhand von Figuren beschrieben. Die Figuren sind lediglich beispielhaft und schränken den allgemeinen Erfindungsgedanken nicht ein. Es zeigen:
- Fig. 1: in (a) eine Anordnung mit zwei spiegelsymmetrisch zueinander angeordneten modularen Raupenanbindungen in einer perspektivischen Ansicht, und in (b) die modulare Raupenanbindung in einer perspektivischen Ansicht von unten;
- Fig. 2: eine Triebachsanordnung mit einer modularen Raupenanbindung in einer perspektivischen Ansicht;
- Fig. 3: in (a) einen Triebachskörper, an dessen erstem Ende eine modulare Raupenanbindung und ein an dieser angeordnetes Raupenlaufwerk angeordnet sind, während der Triebachskörper an seinem zweiten Ende in herkömmlicher Art und Weise ohne eine Raupenanbindung ausgebildet ist, und in (b) den Triebachskörper aus (a) mit einer Antriebs- und/oder Schaltgetriebeeinheit; und
- Fig. 4: in (a) - (c) jeweils eine weitere Ausführungsform einer Triebachsanordnung, wobei (c) ein schematisches Schnittbild zeigt.

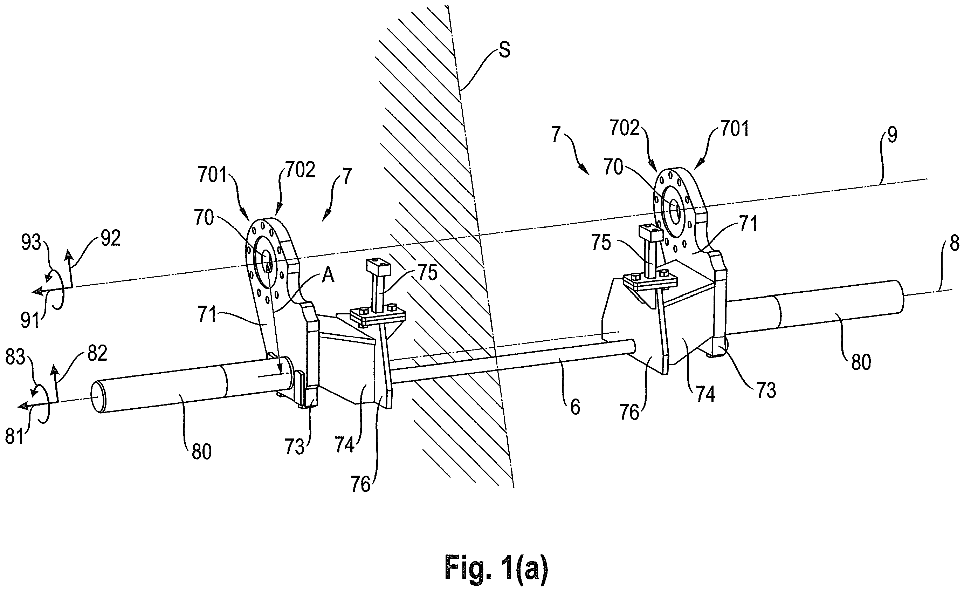

Fig. 1 (a) zeigt zwei modulare Raupenanbindungen 7, die spiegelsymmetrisch zu einer Spiegelfläche S angeordnet sind. Diese Anordnung entspricht der Anordnung, die in einem montierten Zustand der Raupenanbindungen 7 an einen herkömmlichen, zum Antrieb von Reifen (nicht gezeigt) ausgebildeten Triebachskörper 5 vorliegt.

Die Raupenanbindungen 7 sind jeweils zum Anordnen eines Raupenlaufwerks 2 an den Triebachskörper 5 vorgesehen. Die Raupenanbindungen 7 sind hier durch eine Versteifungsstrebe 6 miteinander verbunden. Die Versteifungsstrebe 6 nimmt Kräfte auf, die beispielsweise bei einem Abbremsen eines einzelnen Raupenlaufwerks 2 auftreten. Sie ist zur Versteifung vorgesehen.

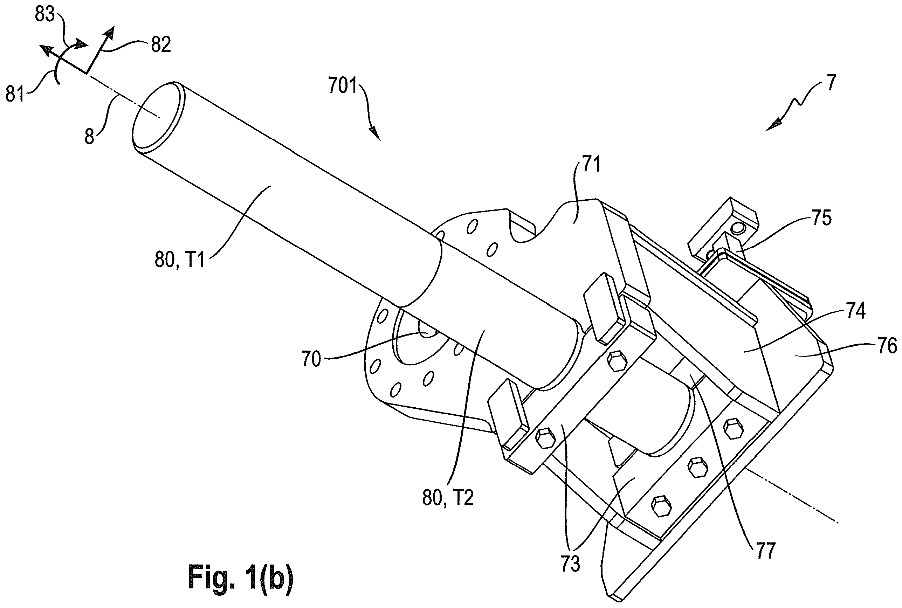

Aufgrund der spiegelsymmetrischen Anordnung der Raupenanbindungen 7 werden diese im Folgenden anhand nur einer der Raupenanbindungen 7 beschrieben:
Die Raupenanbindung 7 weist als Trägerelement 71 eine Trägerplatte 71 auf, die sich quer zu einer Triebachse 9 erstreckt. Im Rahmen der Fig. 1 - 3 werden die Begriffe Trägerelement 71 und Trägerplatte synonym verwendet.

In der Trägerplatte 71 ist eine Durchgangsbohrung 70 vorgesehen. Die Durchgangsbohrung 70 erstreckt sich konzentrisch um die Triebachse 9. Sie ist zum Positionieren der Trägerplatte 71 an einen Triebachskörper 5 vorgesehen.

Exzentrisch zur Triebachse 9 ist eine Steckachse 80 an der Trägerplatte 71 angeordnet. Die Steckachse 80 erstreckt sich quer zur Trägerplatte 71. Sie ist konzentrisch um eine Achse 8 angeordnet. Achse 8 und Triebachse 9 sind somit parallel zueinander angeordnet. Sie sind um einen Achsabstand A voneinander beabstandet.

An einer dem Triebachskörper 5 zugewandten Seite 702 der Trägerplatte 71 ist ein Abstandskörper 74 an der Trägerplatte 71 angeordnet. Der Abstandskörper 74 kann, insbesondere aus Blechen, gebaut oder als Gusskörper ausgebildet sein. Der Abstandkörper 74 weist eine ihn begrenzende Wand 76 auf, die von der Trägerplatte 71 beabstandet ist. Die Wand 76 erstreckt sich im Wesentlichen parallel der Trägerplatte 71. Oberhalb der Wand 76 ist ein Stützsteg 75 angeordnet. Der Stützsteg 75 erstreckt sich in eine vertikale Richtung.

Die Steckachse 80 erstreckt sich bis zur Wand 76 (s. Fig. 1 (b)). Dadurch können auf die Steckachse 80 wirkende Kräfte über die Wand 76 in den Stützsteg 75 geleitet werden.

Sichtbar ist, dass sich aufgrund der spiegelsymmetrischen Anordnung der beiden Raupenanbindungen 7 die Durchgangsbohrungen 70 beider Trägerplatten 71 konzentrisch um dieselbe Triebachse 9, und beide Steckachsen 80 konzentrisch um dieselbe Achse 8 erstrecken.

Fig. 1 (b) zeigt die modulare Raupenanbindung 7 von unten. Sichtbar ist, dass die Steckachse 80 mit einem ersten Klemmbügel 73 lösbar, hier verschraubbar, an der Trägerplatte 71 und mit einem zweiten Klemmbügel 73 lösbar, hier ebenfalls verschraubbar, an der Wand 76 befestigt ist. Die Steckachse 80 durchsetzt daher jeweils eine zwischen der Trägerplatte 71 und dem ersten Klemmbügel 73 und eine zwischen der Wand 76 und dem zweiten Klemmbügel 73 gebildete Ausnehmung (nicht bezeichnet). Die Wand 76 weist dafür eine Halbschale 77 auf, mit der der zweite Klemmbügel 73 zusammenwirkt.

Um zu vermeiden, dass sich die Steckachse 80 durch Lösen der Schraubverbindungen von der Raupenanbindung 7, insbesondere von der Trägerplatte 71 und/oder der Wand 76, löst, ist der mit der Wand 76 befestigte zweite Klemmbügel 73 stoffschlüssig mit der Wand 76 verbunden, insbesondere verschweißt. Die Halbschale 77 wird dafür bei der Montage vorfixiert. Nach dem Einlegen der Steckachse 80 wird sie mit dem zweiten Klemmbügel 73 verschraubt. Zudem wird die Steckachse 80 in axialer Richtung 81 der Achse 8, insbesondere durch eine Verschraubung, fixiert.

Die Trägerplatte 71 und der zweite Klemmbügel 73 bilden dadurch eine Auflagefläche für die Steckachse 80 in Hauptkraftrichtung. Die stoffschlüssige Verbindung unterliegt zudem nicht den möglichen Montagefehlern oder Setzverlusten einer Schraubverbindung. Das Risiko des Verlierens der Steckachse 80, und somit des Raupenlaufwerks 7, ist dadurch gegenüber einer Verschraubung erheblich verringert.

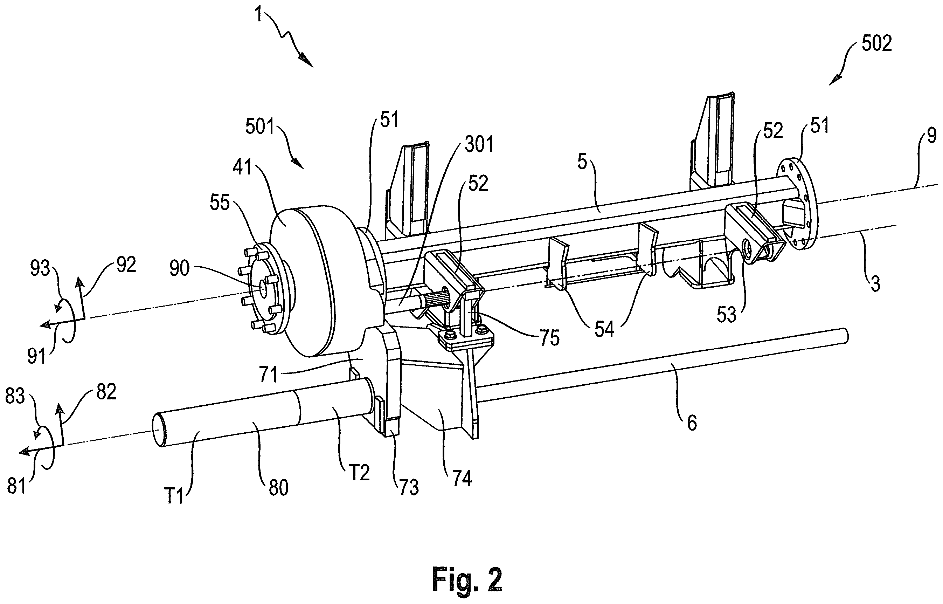

Fig. 2 zeigt eine Triebachsanordnung 1 mit einem Triebachskörper 5, an dessen erstem Ende 501 die modulare Raupenanbindung 7 eingebaut ist. An einem zweiten, dem ersten gegenüber liegenden Ende 502 ist die zweite Raupenanbindung 7 anbaubar.

Zum Befestigen der Raupenanbindung 7 ist ein Flansch 51 am Triebachskörper 5 vorgesehen. Der Flansch 51 ist hier stoffschlüssig am Triebachskörper 5 befestigt, insbesondere angeschweißt. Die Trägerplatte 71 ist lösbar, insbesondere mittels Schrauben, am Flansch 51 festgelegt.

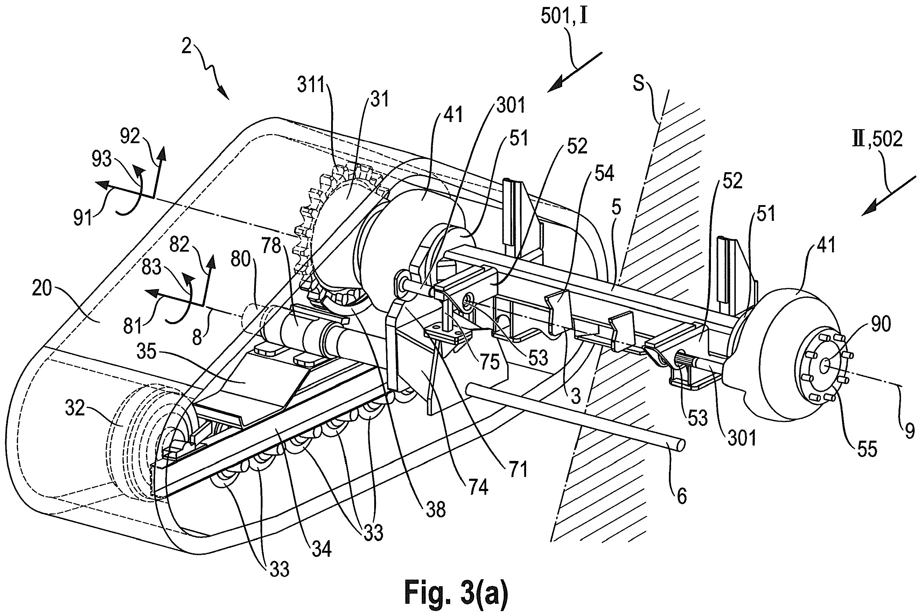

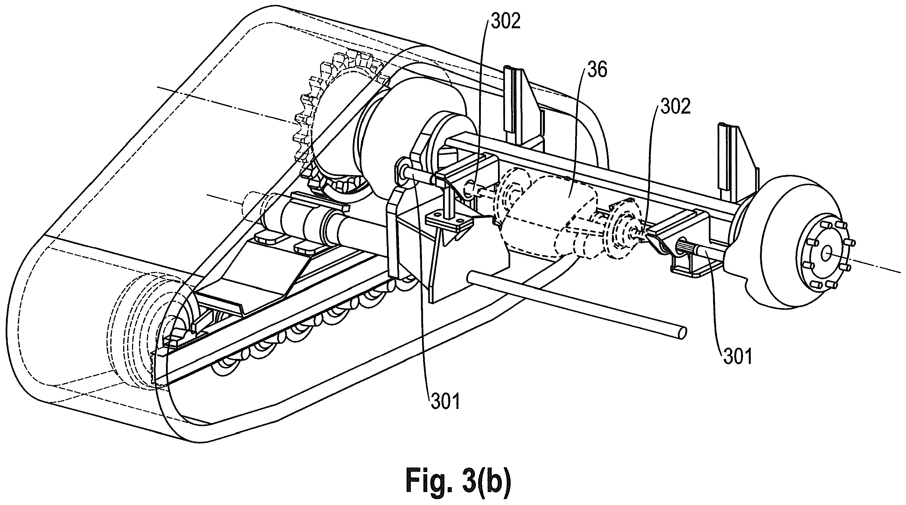

An der dem Triebachskörper 5 abgewandten Seite 701 der Trägerplatte 71 ist zudem ein Achsendabtrieb 41 angebaut. Weiterhin ist ein Radflansch 55 für das Raupenlaufwerk 2, insbesondere für ein Antriebsrad 31 (Turas, s. Fig. 3 (a), (b)) des Raupenlaufwerks 2, an der dem Triebachskörper 5 abgewandten Seite (nicht bezeichnet) des Achsendabtriebs 41 vorgesehen. Der Achsendabtrieb 41 sowie der Radflansch 55 erstrecken sich konzentrisch um die Triebachse 9. Der Radflansch 55 ist zum Befestigen entweder eines Raupenlaufwerks 2 oder eines Rades eines Reifens (nicht gezeigt) vorgesehen. Der Achsendabtrieb 41 ist insbesondere zum Untersetzen der Drehzahl eines Antriebsmotors (nicht gezeigt), insbesondere eines Verbrennungsmotors, vorgesehen.

Dafür weist der Achsendabtrieb 41 eine Antriebswelle 301 auf, die sich konzentrisch zu einer Abtriebswelle 302 (s. Fig. 3 (b)) einer Antriebs- und/oder Schaltgetriebeeinheit 36 (s. Fig. 3 (b)) erstreckt. Abtriebsseitig weist der Achsendabtrieb 41 eine Triebwelle 90 auf, die sich konzentrisch um die Triebachse 9 erstreckt. Die Triebwelle 90 durchsetzt den Radflansch 55. Mit der Triebwelle 90 ist das Antriebsrad 31 des Raupenlaufwerks 2 drehfest verbindbar. Die Triebwelle 90 treibt daher das Raupenlaufwerk 2 an. Bei dieser Anordnung wird die Abtriebswelle 302 der Antriebs- und/oder Schaltgetriebeeinheit 36 lediglich um eine Dicke (nicht bezeichnet) der Trägerplatte 71 verlängert. Die Radanbindung 7 bewirkt keine Drehzahländerung.

Die Antriebswelle 301 des Achsendabtriebs 41 ist mit der Abtriebswelle 302 der Antriebs-und/oder Schaltgetriebeeinheit 36 drehfest verbunden. Die Antriebs- und/oder Schaltgetriebeeinheit 36 wird von dem Verbrennungsmotor aus angetrieben. Sie umfasst ein vorzugsweise hydromotorisch angetriebenes Schaltgetriebe (nicht gezeigt) und kann zudem ein Bremsgetriebe (nicht gezeigt) umfassen. Zum Befestigen der Antriebs- und/oder Schaltgetriebeeinheit 36 sind, insbesondere mittig, an dem Triebachskörper 5 Befestigungsmittel 54 vorgesehen.

Da die Antriebs- und/oder Schaltgetriebeeinheit 36 beide beidseitig des Triebachskörpers 5 angeordnete Achsendabtriebe 41 antreibt, weist sie für jedes Raupenlaufwerk 2 beziehungsweise für jeden Reifen jeweils eine Abtriebswelle 302 auf. Da die Abtriebswellen 302 der Antriebs- und/oder Schaltgetriebeeinheit 36 fluchtend zu den Antriebswellen 301 der Achsendabtriebe 41 angeordnet sind, erstrecken sie sich konzentrisch um die Antriebsachse 3.

Am Triebachskörper 5 ist für jede modulare Raupenanbindung 7 jeweils ein Quersteg 52 vorgesehen, der sich in eine radiale Richtung 92 der Triebachse 9, insbesondere horizontal, erstreckt. Der Quersteg 52 ist u- förmig ausgebildet, so dass sich gegenüberliegende Schenkel (nicht bezeichnet) des Querstegs 52 in vertikaler Richtung nach unten erstrecken. Er ist mechanisch mit dem Stützsteg 75 verbunden. Der Quersteg 52 und der Stützsteg 75 sind beispielsweise miteinander verschraubt, so dass sie voneinander lösbar sind. Dabei ist der Stützsteg 75 zwischen den Schenkeln des Querstegs 52 angeordnet, so dass er sich nicht parallel der axialen Richtung 91 der Triebachse 9 verschieben kann. Auf die Steckachse 80 wirkende Kräfte, insbesondere Biegekräfte, können über die Wand 76 in den Stützsteg 75 und von dort aus über den Quersteg 52 und in den Triebachskörper 5 abgeleitet werden.

Sichtbar ist, dass in den Schenkeln des Querstegs 52 jeweils Durchgangsbohrungen (nicht bezeichnet) vorgesehen sind, die von der Antriebswelle 301 des Achsendabtriebs 41 und/oder der Abtriebswelle 302 der Antriebs- und/oder Schaltgetriebeeinheit 36 durchsetzt sind.

Bei der Triebachsanordnung 1 der Fig. 3 (a) sind an einem ersten Ende 501 des Triebachskörpers 5 eine modulare Raupenanbindung 7 und ein an dieser angeordnetes Raupenlaufwerk 2 angeordnet. Das erste Ende 501 zeigt daher die Konfiguration der selbstfahrenden Erntemaschine (nicht gezeigt) im Raupenbetrieb oder im Reifenbetrieb.

An einem zweiten Ende 502 ist der Triebachskörper 5 noch in herkömmlicher Art und Weise ohne eine Raupenanbindung 7 ausgebildet. Das zweite Ende 502 zeigt daher die Konfiguration der selbstfahrenden Erntemaschine im Reifenbetrieb.

Zum Anordnen der modularen Raupenanbindung 7 müssen am zweiten Ende 502 der Radflansch 55 und der Achsendabtrieb 41 zunächst noch entfernt werden. Die modulare Raupenanbindung 7 ist dann auf den Triebachskörper 5 aufsteckbar. Anschließend werden der Achsendabtrieb 41 und der Radflansch 55 wieder angebaut. Die selbstfahrende Erntemaschine ist daher mit der modularen Raupenanbindung 7 nachrüstbar.

Im einmal montierten Zustand der modularen Raupenanbindung 7 müssen der Radflansch 55 und der Achsendabtrieb 41 zum Umrüsten der selbstfahrenden Erntemaschine vom Raupenbetrieb in den Reifenbetrieb oder umgekehrt nicht mehr entfernt werden. Das Umrüsten ist dann durch Entfernen der Steckachse 80 oder eines ersten Teils T1 der Steckachse 80 möglich.

Sichtbar ist, dass die Steckachse 80 zum Lagern des Raupenlaufwerks 2 vorgesehen ist. Dafür ist eine Tragstruktur 35 des Raupenlaufwerks 2 in und gegen eine Umfangsrichtung 83 der Achse 8 um die Steckachse 80 schwenkbar montiert. Dadurch können beim Fahren Bodenunebenheiten ausgeglichen werden.

Die Tragstruktur 35 umfasst einen Querträger 34, der sich quer zur Steckachse 80 erstreckt, und an dem Laufrollen 33 sowie Umlenkrollen 32 für eine Raupe 20 angeordnet sind. Die Raupe 20 ist hier als Stahlraupe ausgebildet. Es sind aber auch andere Raupen, insbesondere Gummi- oder Hybridraupen, verwendbar. Das Raupenlaufwerk 2 ist hier ein Schienenraupenlaufwerk. Es ist aber auch ein Gleiskettenlaufwerk verwendbar.

Zum Antrieb der Raupe 20 ist die Antriebsrolle 31 vorgesehen, die eine Verzahnung 311 aufweist. Die Verzahnung 311 ist mit einer Gegenverzahnung (nicht gezeigt) der Raupe 20 in Eingriff. Die Antriebsrolle 31 erstreckt sich konzentrisch zur Triebachse 9 und ist drehfest mit der Triebwelle 90 verbunden.

Eine Differenz des Durchmessers (nicht gezeigt) des Antriebsrades 31 des Raupenlaufwerks 2 gegenüber dem der Reifen kann beispielsweise mit der Antriebs- und/oder Schaltgetriebeeinheit 36 ausgeglichen werden, beispielsweise durch einen zusätzlichen Gang für den Raupenbetrieb.

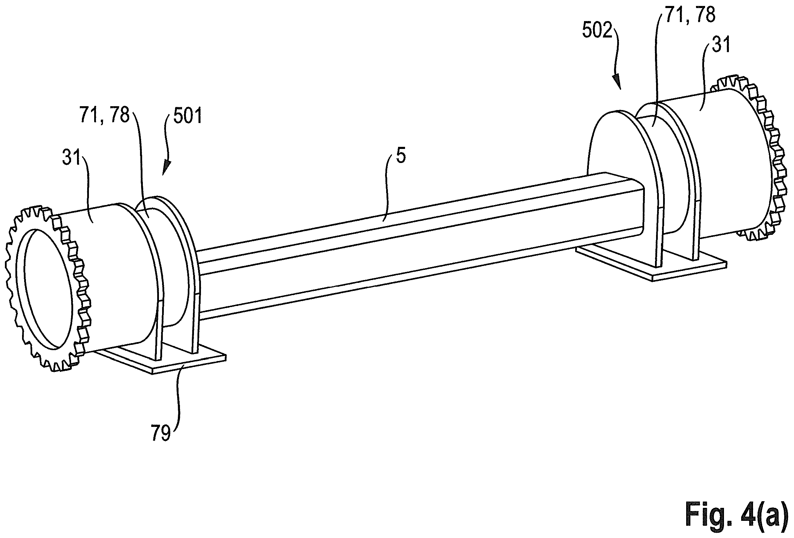

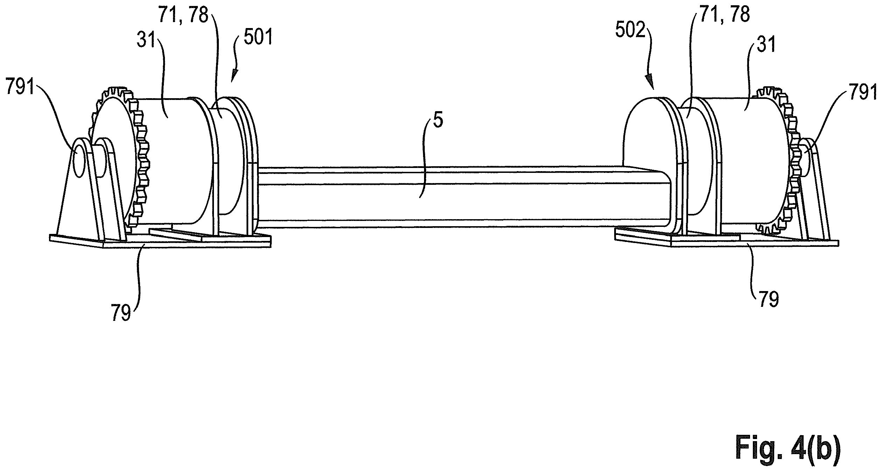

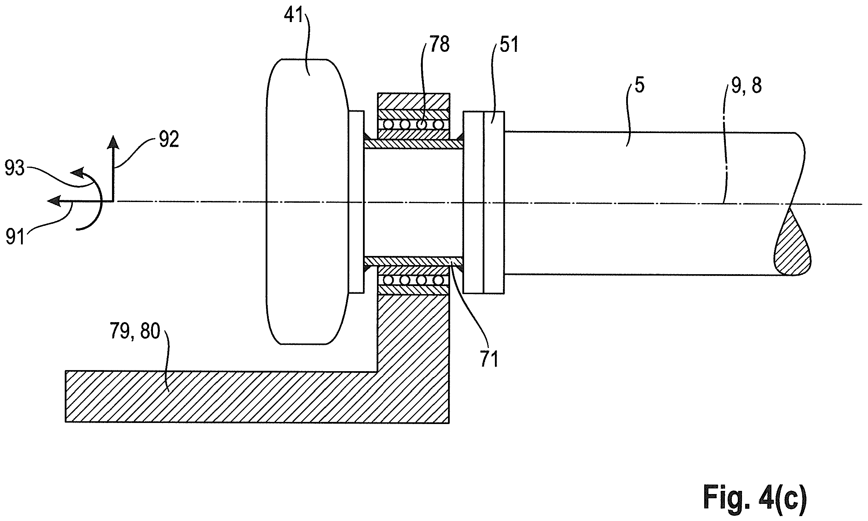

Fig. 4 zeigt in (a) - (c) jeweils eine weitere Ausführungsform einer Triebachsanordnung mit einer erfindungsgemäßen Raupenanbindungen 7 schematisch.

Der Übersichtlichkeit halber ist der Achsendabtrieb 41 in den Fig. 4 (a) und (b) nicht dargestellt. Sichtbar ist hier der Triebachskörper 5 mit den beidseitig an seinen Enden 501, 502 angeordneten Trägerelementen 71. Zur Verdeutlichung ist an den Trägerelementen 71 jeweils das Antriebsrad 31 der Raupenlaufwerke 2 dargestellt. Die Fig. 4 (c) zeigt demgegenüber den Achsendabtrieb 41 aber nicht das Antriebsrad 31.

Alle drei Ausführungsformen sehen eine Lagerachse 8 konzentrisch zur Triebachse 9 vor. Das Lager 78 ist dafür im Trägerelement 71 (s. Fig. 4 (c)) angeordnet. Es ist hier als Kugelkranz ausgebildet. Von der Lagerachse 8 beabstandet sind Befestigungsmittel 79 als Anbindung für das Raupenlaufwerk 2 vorgesehen.

Die Ausführungsform der Fig. 4 (b) sieht gegenüber der der Fig. 4 (a) eine zusätzliche Stütze 791 an der dem Triebachskörper 5 abgewandten Seite des Antriebsrades 31 vor. Demgegenüber zeigt die Fig. 4 (c) eine Ausführungsform, bei der eine Steckachse 80 zur Anbindung des Raupenlaufwerks 2 vorgesehen ist. An der Steckachse 80 kann das Raupenlaufwerk drehfest angeordnet werden.

### Bezugszeichenliste

- 1: Triebachsanordnung
- 2: Raupenlaufwerk
- 20: Raupe, Schienenraupe
- 3: Antriebsachse
- 301: Antriebswelle des Achsendabtriebs
- 302: Abtriebswelle der Antriebs- und/oder Schaltgetriebeeinheit
- 31: Antriebsrad, Turas
- 311: Verzahnung
- 32: Umlenkrad
- 33: Laufrad
- 34: Querträger
- 35: Tragstruktur
- 36: Antriebs- und/oder Schaltgetriebeeinheit
- 38: Schutzschiene
- 41: Achsendabtrieb
- 5: Triebachskörper
- 501, 502: Erstes, zweites Ende des Triebachskörpers
- 51: Flansch
- 52: Quersteg
- 53: Durchgangsbohrung
- 54: Befestigungsmittel
- 55: Radflansch
- 6: Versteifungsstrebe
- 7: Raupenanbindung
- 70: Durchgangsbohrung
- 701: Vom Triebachskörper abgewandte Seite
- 702: Dem Triebachskörper zugewandte Seite
- 71: Trägerelement, Trägerplatte
- 73: Erster, zweiter Klemmbügel
- 74: Abstandskörper
- 75: Stützsteg
- 76: Wand
- 77: Halbschale
- 78: Lager
- 79: Anbindung Raupenlaufwerk
- 791: Stütze
- 8: Achse
- 80: Steckachse
- T1, T2: Erster, zweiter Teil der Steckachse
- 81: Axiale Richtung
- 82: Radiale Richtung
- 83: Umfangsrichtung
- 9: Triebachse
- 90: Triebwelle
- 91: Axiale Richtung
- 92: Radiale Richtung
- 93: Umfangsrichtung
- A: Achsabstand
- S: Spiegelfläche
- l: Konfiguration im Raupenbetrieb oder im Reifenbetrieb
- ll: Konfiguration im Reifenbetrieb

## Patentansprüche

1. Modulare Raupenanbindung (7) für eine selbstfahrende Erntemaschine, die zum Anordnen an ein Ende eines Triebachskörpers vorgesehen ist, mit einem Trägerelement (71), an dem ein Lager (78) angeordnet ist, wobei das Lager (78) zum Lagern eines Raupenlaufwerks dient und sich parallel zu einer Triebachse (9) für das Raupenlaufwerk (2) erstreckt,
**dadurch gekennzeichnet, dass**
das Trägerelement (71) als Trägerplatte ausgebildet ist, die sich quer zur Triebachse (9) erstreckt, und dass an einer Seite (702) der Trägerplatte (71) ein Abstandskörper (74) angeordnet ist, der eine ihn begrenzende Wand (76) aufweist, die sich parallel der Trägerplatte (71) erstreckt.

2. Modulare Raupenanbindung (7) nach Anspruch 1, **dadurch gekennzeichnet, dass** das Lager (78) konzentrisch oder exzentrisch zur Triebachse (9) angeordnet ist.

3. Modulare Raupenanbindung (7) nach einem der vorherigen Ansprüche, **dadurch gekennzeichnet, dass** das Lager (78) durch einen Kugelkranz gebildet ist.

4. Modulare Raupenanbindung (7) nach einem der vorherigen Ansprüche, **dadurch gekennzeichnet, dass** am Trägerelement (71) eine Steckachse (80) angeordnet ist, die zum Lagern des Raupenlaufwerks (2) dient.

5. Modulare Raupenanbindung (7) nach einem der vorherigen Ansprüche, **dadurch gekennzeichnet, dass** die Steckachse (80) lösbar an der Trägerplatte (71) befestigt ist.

6. Modulare Raupenanbindung (7) nach einem der vorherigen Ansprüche, **dadurch gekennzeichnet, dass** die Steckachse (80) den Abstandskörper (74) vollständig durchsetzt.

7. Modulare Raupenanbindung (7) nach einem der vorherigen Ansprüche, **dadurch gekennzeichnet, dass** die Steckachse (80) an der Trägerplatte (71) und/oder der Wand (76) durch einen Klemmbügel (73) gehalten ist.

8. Modulare Raupenanbindung (7) nach einem der vorherigen Ansprüche, **dadurch gekennzeichnet, dass** am Abstandskörper (74) ein Stützsteg (75) angeordnet ist, der sich parallel der Trägerplatte (71) erstreckt.

9. Modulare Raupenanbindung (7) nach einem der vorherigen Ansprüche, **dadurch gekennzeichnet, dass** in der Trägerplatte (71) eine Durchgangsbohrung (70), insbesondere fluchtend zur Triebachse (9), angeordnet ist, die zur Positionierung der Raupenanbindung (7) an den Triebachskörper (5) vorgesehen ist.

10. Triebachsanordnung (1) mit einem Triebachskörper (5) und zwei modularen Raupenanbindungen (7) nach einem der vorherigen Ansprüche, die jeweils an gegenüberliegenden Enden (501, 502) des Triebachskörpers (5), insbesondere spiegelsymmetrisch zueinander, angeordnet sind.

11. Triebachsanordnung (1) nach Anspruch 10, **dadurch gekennzeichnet, dass** die modularen Raupenanbindungen (7) sowie der Triebachskörper (5) fluchtend zu einer Triebachse (9) für die Raupenlaufwerke (2) angeordnet sind.

12. Selbstfahrende Erntemaschine, insbesondere Mähdrescher, mit einer Triebachsanordnung (1) nach einem der Ansprüche 10 - 11.

13. Selbstfahrende Erntemaschine nach Anspruch 12, **dadurch gekennzeichnet, dass** die Raupenanbindungen (7) beidseitig des Triebachskörpers (5), insbesondere der Vorderachse, jeweils zwischen diesem und einem Achsendabtrieb (41) angeordnet sind.

## Claims

1. A modular track connection (7) for a self-propelled harvesting machine which is provided for positioning at one end of a drive axle body, with a support element (71) on which a bearing (78) is disposed, wherein the bearing (78) serves to mount a track roller unit and extends parallel to a drive axle (9) for the track roller unit (2),
**characterized in that**
the support element (71) is configured as a support plate which extends transversely to the drive axle (9), and **in that** a spacer body (74) is disposed on one side (702) of the support plate (71), the spacer body having a wall (76) which bounds it and which extends parallel to the support plate (71).

2. The modular track connection (7) according to claim 1, **characterized in that** the bearing (78) is disposed concentrically to or eccentrically with respect to the drive axle (9).

3. The modular track connection (7) according to one of the preceding claims, **characterized in that** the bearing (78) is formed by a ball bearing joint.

4. The modular track connection (7) according to one of the preceding claims, **characterized in that** a floating axle (80) is disposed on the support element (71) which serves to mount the track roller unit (2).

5. The modular track connection (7) according to one of the preceding claims, **characterized in that** the floating axle (80) is releasably secured to the support plate (71).

6. The modular track connection (7) according to one of the preceding claims, **characterized in that** the floating axle (80) passes completely through the spacer body (74).

7. The modular track connection (7) according to one of the preceding claims, **characterized in that** the floating axle (80) is retained on the support plate (71) and/or the wall (76) by means of a clamping bracket (73).

8. The modular track connection (7) according to one of the preceding claims, **characterized in that** a support brace (75) is disposed on the spacer body (74) and extends parallel to the support plate (71).

9. The modular track connection (7) according to one of the preceding claims, **characterized in that** a through hole (70) is disposed in the support plate (71), in particular in alignment with the drive axle (9), and is provided for positioning the track connection (7) on the drive axle body (5).

10. A drive axle assembly (1) with a drive axle body (5) and two modular track connections (7) according to one of the preceding claims, which are respectively disposed on opposite ends (501, 502) of the drive axle body (5), in particular with mirror symmetry with respect to each other.

11. The drive axle assembly (1) according to claim 10, **characterized in that** the modular track connections (7) as well as the drive axle body (5) are disposed in alignment with a drive axle (9) for the track roller unit (2).

12. A self-propelled harvesting machine, in particular a combine harvester, with a drive axle assembly (1) according to claim 10 or claim 11.

13. The self-propelled harvesting machine according to claim 12, **characterized in that** the track connections (7) are disposed on both sides of the drive axle body (5), in particular the front axle, respectively between this and an axle end output (41).

## Revendications

1. Raccord de chenille modulaire (7) pour une machine de récolte automotrice, qui est prévu pour être disposé à une extrémité d'un corps d'essieu moteur, comprenant un élément porteur (71) sur lequel est disposé un support (78), le support (78) servant à supporter un train de roulement à chenilles et s'étendant parallèlement à un essieu moteur (9) pour le train de roulement à chenilles (2), **caractérisé en ce que** l'élément porteur (71) est conformé en plaque porteuse qui s'étend transversalement à l'essieu moteur (9) et **en ce que** sur un côté (702) de la plaque porteuse (71) est disposé un corps d'écartement (74), lequel comporte une paroi (76) qui le limite et qui s'étend parallèlement à la plaque porteuse (71) .

2. Raccord de chenille modulaire (7) selon la revendication 1, **caractérisé en ce que** le support (78) est disposé de façon concentrique ou excentrique par rapport à l'essieu moteur (9).

3. Raccord de chenille modulaire (7) selon une des revendications précédentes, **caractérisé en ce que** le support (78) est formé par une couronne à billes.

4. Raccord de chenille modulaire (7) selon une des revendications précédentes, **caractérisé en ce que** sur l'élément porteur (71) est disposé un demi-arbre (80) qui sert à supporter le train de roulement à chenilles (2).

5. Raccord de chenille modulaire (7) selon une des revendications précédentes, **caractérisé en ce que** le demi-arbre (80) est fixé à la plaque porteuse (71) de façon amovible.

6. Raccord de chenille modulaire (7) selon une des revendications précédentes, **caractérisé en ce que** le demi-arbre (80) traverse entièrement le corps d'écartement (74).

7. Raccord de chenille modulaire (7) selon une des revendications précédentes, **caractérisé en ce que** le demi-arbre (80) est maintenu contre la plaque porteuse (71) et/ou contre la paroi (76) par l'intermédiaire d'un étrier de serrage (73).

8. Raccord de chenille modulaire (7) selon une des revendications précédentes, **caractérisé en ce que** sur le corps d'écartement (74) est disposée une barrette d'appui (75) qui s'étend parallèlement à la plaque porteuse (71).

9. Raccord de chenille modulaire (7) selon une des revendications précédentes, **caractérisé en ce que** dans la plaque porteuse (71) est ménagé un perçage débouchant (70), en particulier en alignement avec l'essieu moteur (9), qui est prévu pour le positionnement du raccord de chenille (7) sur le corps d'essieu moteur (5).

10. Agencement d'essieu moteur (1) comprenant un corps d'essieu moteur (5) et deux raccords de chenille modulaires (7) selon une des revendications précédentes, qui sont disposés respectivement à des extrémités opposées (501, 502) du corps d'essieu moteur (5), en particulier avec une symétrie en miroir l'un par rapport à l'autre.

11. Agencement d'essieu moteur (1) selon la revendication 10, **caractérisé en ce que** les raccords de chenille modulaires (7) ainsi que le corps d'essieu moteur (5) sont disposés en alignement avec un essieu moteur (9) pour les trains de roulement à chenilles (2).

12. Machine de récolte automotrice, en particulier moissonneuse-batteuse, comprenant un agencement d'essieu moteur (1) selon une des revendications 10-11.

13. Machine de récolte automotrice selon la revendication 12, **caractérisée en ce que** les raccords de chenille (7) sont disposés de chaque côté du corps d'essieu moteur (5), en particulier de l'essieu avant, respectivement entre celui-ci et une sortie en bout d'arbre (41).
